Europäisches Patentamt

European Patent Office

Office européen des brevets

(19)

(11) **EP 0 587 489 B1**

(12) **FASCICULE DE BREVET EUROPEEN**

(45) Date de publication et mention
de la délivrance du brevet:
**26.11.1997 Bulletin 1997/48**

(51) Int. Cl.$^6$: **B21D 11/14**, C21D 9/22,
C21D 8/06, B23P 15/32

(21) Numéro de dépôt: **93402167.6**

(22) Date de dépôt: **07.09.1993**

(54) **Procédé et machine pour fabriquer une barre à trous torsadée trempée**

Verfahren und Vorrichtung zum Herstellen einer mit Bohrungen versehenen gehärteten
Gewindestange

Method and device to produce a hardened twisted bar with holes

(84) Etats contractants désignés:
**DE GB SE**

(30) Priorité: **08.09.1992 FR 9210696**

(43) Date de publication de la demande:
**16.03.1994 Bulletin 1994/11**

(73) Titulaire: **Ory, Jacques**
**92190 Meudon (FR)**

(72) Inventeur: **Ory, Jacques**
**92190 Meudon (FR)**

(56) Documents cités:
**EP-A- 0 173 675**          **FR-A- 1 400 420**
**FR-A- 2 288 786**          **FR-A- 2 388 887**

## Description

La présente invention concerne un procédé pour fabriquer une barre à trous torsadée trempée selon le préambule de la revendication 1, en particulier pour la fabrication ultérieure de forets en acier rapide.

La présente invention concerne également une machine pour fabriquer une telle barre à trous selon le préambule de la revendication 17.

Les forets hélicoïdaux sont traditionnellement obtenus par usinage de deux gorges en hélices symétriques dans une barre ronde, généralement en acier rapide recuit ; ces gorges servent au dégagement des copeaux et leurs bords périphériques, appelés listels, assurent le guidage du foret dans l'alésage qui est en train d'être percé. Du côté de la pointe du foret, ces deux gorges forment aussi les deux arêtes de coupe.

On connaît les forets à trous d'huile comportant deux conduits - encore appelés "trous" - décalés d'environ 90° par rapport aux gorges en hélice pour être placés au centre géométrique des deux parties métalliques que présente la section de l'outil entre les gorges. Ces trous permettent de véhiculer un liquide de coupe ou un brouillard gazeux, depuis l'extrémité du foret opposée à la pointe, ou encore à partir d'une bague dans laquelle la queue du foret tourne de manière étanche. Les trous en hélice débouchent à travers deux zones de détalonnage situées à la pointe du foret, immédiatement en arrière des deux arêtes de coupe.

La tendance actuelle des fabricants de forets consiste à meuler les gorges sur des barres cylindriques dites "torsadées" puis traitées, c'est à dire comportant déjà les trous avec leur forme hélicoïdale définitive.

La rectification de barres torsadées puis traitées pour obtenir des gorges à hélice constante suppose que les trous soient disposés selon un même pas d'hélice, faute de quoi les trous ne sont plus centrés entre les gorges et risquent même de déboucher dans les gorges.

Ces barres destinées à la fabrication des forets à trous d'huile sont appelées "barres à trous" et sont obtenues selon des procédés connus, par exemple, d'après les FR-A-1.006.713 et 1.040.384, selon lesquels on réalise d'abord, par extrusion ou filage, un profilé cylindrique à trous sensiblement rectilignes. Après recuit et dressage, les barres à trous sont torsadées à hélice constante à 780°C, sur une machine connue, par exemple d'après les FR-A-1.327.714 et 2.104.703 ce dernier formant la base des préambules des revendications 1 et 17.

Ce produit semi-fini est ensuite livré à l'outilleur, qui doit tremper les ébauches de foret. Le chauffage à la température de trempe (à environ 1200°C) libère des tensions qui modifient le torsadage. Aux probables erreurs de torsadage initial, s'ajoutent donc celles introduites par la trempe.

La machine à torsader classique - ou banc de torsadage - comporte essentiellement un mandrin moteur capable d'entraîner une extrémité du profilé à torsader à une vitesse de rotation donnée, un mandrin dit "fixe" qui retient en rotation l'autre extrémité de la barre de façon à engendrer une mise sous contrainte de torsion de la barre pendant l'opération de torsadage. Le mandrin fixe peut être déplacé longitudinalement de façon à pouvoir recevoir des barres de différentes longueurs, variant par exemple de 1 à 7 mètres de longueur. Ce mandrin fixe est porté par un chariot se déplaçant sur le banc selon les dilatations du profilé. Un chariot portant un inducteur de chauffage suivi d'une douche se déplace d'un mandrin à l'autre. Ainsi, on forme entre l'inducteur et la douche, une zone de température maximale et donc de résistance mécanique minimale, et on déplace cette zone le long du profilé. Ceci suffit à définir avec la précision voulue la position de la zone subissant le torsadage. Cette méthode "au défilé" évite l'apparition du phénomène de striction locale qui interdirait le torsadage, et permet ainsi de torsader des barres de grande longueur.

La machine à torsader conforme à l'art antérieur a deux défauts.

Le premier défaut est de nature thermique. On comprend qu'en première approximation la rotation relative totale subie par une extrémité du profilé par rapport à l'autre doit à chaque instant être proportionnelle à la longueur de la partie du profilé qui a déjà été parcourue par le moyen de chauffage. Or, cette partie torsadée est à température variable et sensiblement différente de la température ambiante. En d'autres termes pour une rotation relative donnée entre les deux extrémités du profilé, la longueur de barre torsadée et refroidie est inférieure à celle qui correspondrait au pas voulu. On sait compenser manuellement cette erreur en torsadant la barre à un pas légèrement supérieur à celui voulu de façon qu'en fin de torsadage, après refroidissement et donc contraction de la barre, le pas moyen soit bien le pas voulu. Cette approche apporte une amélioration sensible de la précision du torsadage, mais ne permet pas de tenir compte des variations de la température moyenne de la partie déjà torsadée du profilé. Au début du mouvement du chariot, cette température moyenne est très élevée, puis elle diminue. Il en résulte que le pas de la partie torsadée en premier est toujours plus faible que le pas voulu et que le pas à l'autre extrémité de la barre est toujours un peu plus long que le pas voulu. Les écarts constatés sont de l'ordre de moins de trois pour mille.

Ces décalages de quelques pour mille sont habituellement sans inconvénient pour la transformation ultérieure des barres en forets hélicoïdaux de faible longueur. Au contraire, dans le cas des forets très longs, les erreurs de pas se cumulent. Un écart de trois pour mille représente un glissement angulaire relatif de un degré d'angle par pas. Ainsi, pour un foret dont la longueur taillée correspond à dix pas d'hélice, l'écart cumulé atteint 10 degrés d'angle. Ceci peut suffire pour faire déboucher les trous dans les gorges.

Le foret est alors inutilisable, ce qui entraîne une importante perte en matière et valeur ajoutée. Le risque de tels accidents est d'autant plus grand que les erreurs d'origine thermique peuvent se cumuler avec un certain vrillage initial du profilé non encore torsadé.

La présente invention a pour but de proposer un procédé et une machine pour fabriquer une barre à trous torsadée qui simplifie considérablement l'ensemble des opérations nécessaires pour l'obtention de forets terminés tout en augmentant la précision de l'hélice des trous et en diminuant corrélativement les pertes lors de la fabrication.

Suivant un premier aspect de l'invention, le procédé pour fabriquer une barre à trous torsadée trempée, en particulier une barre en acier rapide pour forets à trous, à partir d'un profilé creux, dans lequel on torsade le profilé creux en faisant tourner l'une des extrémités du profilé par rapport à l'autre tout en produisant un mouvement relatif longitudinal entre le profilé et un moyen de chauffage suivi d'un moyen de refroidissement, est caractérisé en ce qu'à l'aide du moyen de chauffage on porte le profilé à une température d'austénitisation d'environ 1200°C, en ce qu'on régule le rapport de vitesses entre la vitesse du déplacement relatif longitudinal et la vitesse de rotation des extrémités du profilé l'une par rapport à l'autre de manière à compenser les variations de longueur du profilé dues aux phénomènes thermiques, et en ce qu'on effectue la trempe lors du refroidissement qui suit le chauffage à la température d'austénitisation.

Ainsi, on effectue le torsadage a une température suffisamment élevée pour pouvoir effectuer directement la trempe à la suite du torsadage. On recueille ainsi toute une série d'avantages. D'une part, l'outilleur est déchargé de l'opération de trempe, qui est coûteuse et délicate à mener. De plus, le torsadage à température très élevée selon l'invention requiert un moindre couple, et il est plus précis car on ne constate aucun phénomène de retour élastique après le refroidissement. Cette meilleure précision à l'issue du torsadage n'est pas remise en cause par une opération ultérieure de réchauffage en vue de la trempe puisque cette trempe est maintenant effectuée directement à l'issue du chauffage pour le torsadage.

En d'autres termes, selon l'état de la technique, l'opération de torsadage introduisait dans la matière des contraintes qui se libéraient ensuite en deux temps, d'une part avec un retour élastique immédiatement après le torsadage, et d'autre part lors du chauffage à haute température en vue de la trempe ultérieure, et chaque fois la géométrie initiale du torsadage subissait des altérations. Au contraire, selon l'invention, on effectue le torsadage à une température telle qu'il n'en résulte aucune tension significative dans la matière, et il n'y a ensuite aucun stade de transformation qui soit susceptible d'altérer la géométrie de torsadage.

Le torsadage à très haute température prévu selon l'invention accroît, par rapport à l'état de la technique, l'influence des variations de longueur dues à des phénomènes thermiques, et les erreurs de pas qui pourraient en résulter. C'est pourquoi il est prévu selon l'invention de réguler le rapport entre la vitesse du déplacement longitudinal relatif et la vitesse de rotation des extrémités du profilé l'une par rapport à l'autre. Autrement dit, on régule le pas apparent de torsadage de manière que le pas finalement obtenu sur la barre à trous torsadée refroidie soit sensiblement égal au pas voulu tout le long de la barre à trous.

Selon un mode de mise en oeuvre préféré de l'invention, on effectue la trempe au défilé, avec un moyen de refroidissement, par exemple une douche, qui subit par rapport au profilé en cours de torsadage, le même déplacement relatif longitudinal que le moyen de chauffe. Ainsi, la trempe ne nécessite plus aucune opération spécifique.

Comme l'on sait, l'opération de trempe s'accompagne de la formation de martensite, avec une variation dimensionnelle brusque que l'on appelle le "gonflement martensitique". Ce phénomène est lui aussi susceptible d'introduire une erreur sur le pas de torsadage final de la barre torsadée refroidie. La régulation du rapport de vitesses selon l'invention permet de tenir compte de ce phénomène en modifiant de manière correspondante le pas apparent pour que le pas finalement obtenu corresponde à celui recherché.

Selon une version particulièrement avantageuse du procédé, on détecte un vrillage initial du profilé et, lors de la régulation du rapport de vitesses, on ajoute algébriquement à la correction compensant les phénomènes thermiques une correction compensant le vrillage initial.

Ainsi, on élimine non seulement les défauts dus aux phénomènes thermiques, mais aussi les défauts résultant du vrillage préexistant dans le profilé. Ce vrillage est introduit dans le profilé au cours des diverses opérations de fabrication du profilé avant le torsadage, et il entraîne un décalage angulaire entre la position idéale des trous et leur position réelle dans le profilé en chaque point de la longueur de ce dernier. Le vrillage est donc une sorte de pré-torsadage à pas variable le long du profilé, et il faut donc retrancher algébriquement ce pré-torsadage variable, au torsadage qu'aurait nécessité un profilé non vrillé, afin d'obtenir sur la barre à trous torsadée refroidie le pas de torsadage souhaité.

Il est donc possible, comme le prévoit un mode de mise en oeuvre avantageux de l'invention, de cumuler la compensation de vrillage initial et la compensation des phénomènes thermiques en une seule et même correction du pas de torsadage, c'est à dire du rapport des vitesses de déplacement relatif longitudinal et respectivement de rotation relative des extrémités du profilé.

Selon un second aspect de l'invention, la machine pour fabriquer une barre à trous torsadée trempée comprenant des moyens pour soutenir et faire tourner l'une par rapport à l'autre les extrémités opposées d'un profilé creux et des moyens pour établir un déplacement longitudinal relatif entre le profilé et un ensemble de traitement thermomécanique comprenant un moyen de chauffage du profilé suivi, relativement au sens du mouvement relatif, par un moyen de refroidissement du profilé, est caractérisé en ce que le moyen de chauffage est adapté à produire dans le profilé une température au moins égale à la température d'austénitisation environ égale à 1200°C, et en ce qu'il est prévu des moyens de régulation du rapport de vitesses entre la vitesse de rotation des extrémités du profilé l'une par rapport à l'autre et la vitesse du déplacement longitudinal relatif pour compenser l'effet des phénomènes thermiques sur le pas de torsadage obtenu après refroidissement de la barre torsadée.

D'autres particularités et avantages de l'invention ressortiront encore de la description ci-après, relative à des exemples de réalisation.

Aux dessins annexés :

- les figures 1 à 3 sont trois vues schématiques en perspective de trois stades de la fabrication d'un foret hélicoïdal ;
- la figure 4 est une vue de dessus, avec arrachement, de la machine de torsadage selon un mode de réalisation de l'invention ;
- la figure 5 est une vue schématique illustrant le vrillage initial d'un profilé par représentation de sections en différents points de la longueur du profilé ;
- les figures 6 et 7 sont deux diagrammes montrant les taux d'allongement le long du profilé à deux stades différents du torsadage ;
- la figure 8 est une vue schématique en plan montrant une installation dans laquelle une machine de relevé du vrillage alimente plusieurs torsadeuses ; et
- les figures 9 et 10 sont des vues partielles semblables à certaines parties de la figure 4 mais relatives à deux variantes de réalisation.

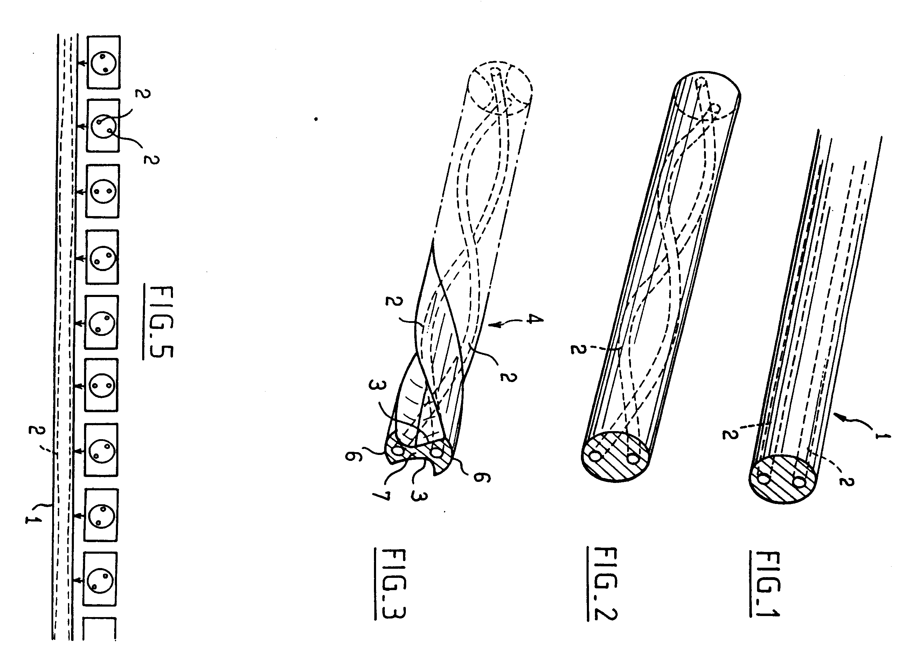

On a représenté aux figures 1 à 3, trois stades d'élaboration d'un foret à trous.

A la figure 1, on a réalisé un profilé (1) de forme générale cylindrique comportant deux trous ou conduits (2) diamétralement opposés, et qui sont en principe parallèles à l'axe du profilé (1).

Au stade représenté à la figure 2, on a torsadé, c'est à dire déformé le profilé (1) par torsion régulièrement répartie longitudinalement pour obtenir ce que l'on appelle une barre à trous, dans laquelle les trous (2) ont pris une forme que l'on souhaite parfaitement hélicoïdale avec un pas bien défini.

Au stade représenté à la figure 3, on a tronçonné la barre à trous torsadée de la figure 2 pour réaliser des forets individuels, dont un seul est représenté, et on a meulé deux gorges hélicoïdales (3), symétriques par rapport à l'axe longitudinal du foret (4). Le pas d'hélice des gorges (3) est le même que celui des trous (2). De plus, les gorges (3) sont positionnées angulairement autour de l'axe du foret (4) de manière que les trous (2) soient sensiblement situés aux centres géométriques de deux lobes métalliques (6) situés de part et d'autre de l'isthme central (7).

On comprend qu'il est essentiel que le pas d'hélice des trous (2) soit régulier et égal à la valeur souhaitée pour qu'on soit certain que, après formation des gorges (3) au même pas, il reste suffisamment de matière tout autour des trous (2), et surtout pour éviter qu'il y ait interférence entre un trou (2) et une gorge (3).

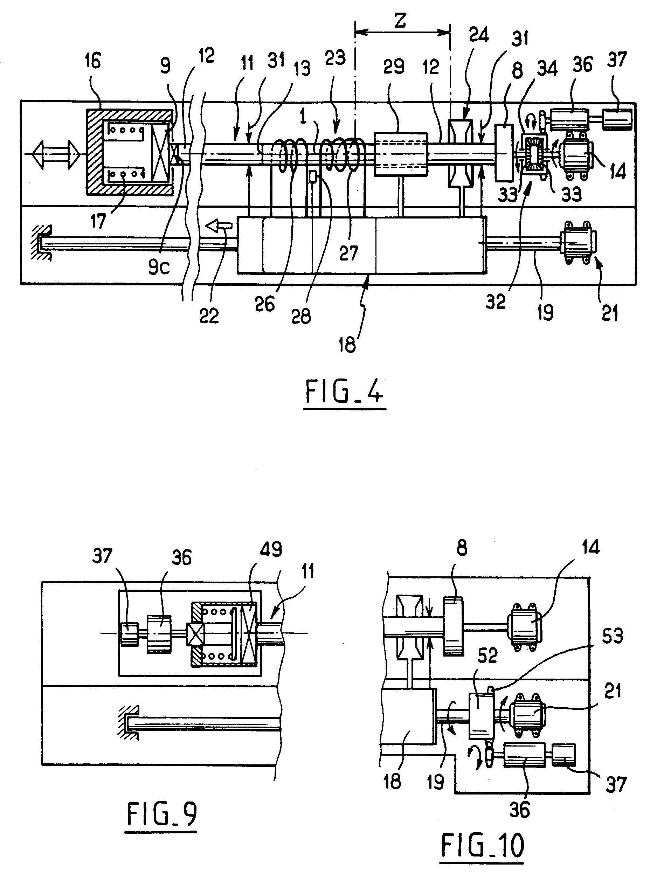

La machine à torsader représentée à la figure 4 sert à transformer le profilé (1) de la figure 1 en une barre à trous selon la figure 2. La machine comprend un mandrin moteur (8) et un mandrin non rotatif (9) disposés coaxialement au deux extrémités de la machine pour permettre d'y fixer les deux extrémités d'une pièce d'oeuvre (11) constituée du profilé (1) à chaque extrémité duquel on a soudé une rallonge (12) de même profil au moyen de soudures (13), dont une seule est représentée. Les rallonges (12) permettent de traiter le profilé (1) sur toute sa longueur de manière homogène sans avoir de pertes par effet d'extrémité. Une fois que le profilé (1) a été torsadé, il est séparé des rallonges (12) et ces dernières peuvent être réutilisées pour torsader le profilé (1) suivant.

Le mandrin moteur (8) est relié à un moteur rotatif (14) pour entraîner en rotation l'une des extrémités du profilé (1) par rapport à l'autre qui est empêchée de tourner par le mandrin non rotatif (9).

Le mandrin moteur (8) est empêché de se déplacer axialement. Le mandrin non rotatif (9) est monté sur un chariot (16) que l'on peut régler axialement pour adapter la machine à la longueur du profilé (1) en cours de torsadage. Par exemple, la course du chariot (16) peut être suffisante pour permettre de traiter des profilés (1) de longueur comprise entre 1 et 7 mètres.

De plus, le mandrin non rotatif (9) a sur le chariot (16) une certaine mobilité axiale pour lui permettre de suivre les variations de longueur du profilé (1) et des rallonges (12) sous l'effet des variations de température. Pour cela, le mandrin (9) est monté coulissant sans possibilité de rotation sur le chariot (16), et il est sollicité en direction opposée au mandrin moteur (8) par un moyen de traction symbolisé par un ressort (17) de manière à soumettre le profilé (1) à une traction contrôlée pendant le torsadage.

La machine comprend en outre un chariot (18) qui est déplaçable parallèlement au profilé (1) au moyen par exemple d'une vis-mère (19) commandée par un moteur (21). Dans l'exemple, le chariot (18) se déplace depuis le mandrin moteur (8) jusqu'au mandrin non rotatif (9) au cours du torsadage, comme l'indique la flèche (22). Le chariot (18) porte un ensemble de traitement thermomécanique comprenant des moyens de chauffage à induction (23) suivis, relativement au sens de déplacement (22), par un moyen de refroidissement (24) du profilé (1), par exemple une douche.

Comme représenté, les moyens de chauffage à induction (23) comprennent des enroulements traversés par la pièce d'oeuvre (11), lorsqu'elle est en place. En service, dans une zone Z située entre les moyens de chauffage (23) et les moyens de refroidissement(24), la température du profilé (1) est telle que celui-ci subit une déformation plastique de torsadage sous l'action du couple moteur fourni par le moteur (14) et du couple de réaction fourni par le mandrin non rotatif (9).

De plus, le chariot (18) se déplaçant selon la flèche (22), cette zone Z se déplace le long du profilé (1) de sorte que toutes les régions de la longueur du profilé (1) subissent successivement une déformation plastique de torsadage pour que finalement l'ensemble du profilé (1) soit transformé en une barre à trous torsadée selon la figure 2. Cette méthode assure la non apparition du phénomène de striction locale qui interdirait le torsadage, et permet de torsader au défilé des barres de grande longueur.

Conformément à l'invention, les moyens de chauffage (23) sont conçus pour porter le profilé (1) de la température ambiante à une température d'environ 1200°C, selon les nuances d'acier employées, température correspondant à l'austénitisation.

Dans l'exemple préférentiel qui est représenté, les moyens de chauffage (23) comprennent un moyen de chauffage primaire (26) suivi, relativement au sens du mouvement longitudinal selon la flèche (22), par un moyen de chauffage régulé (27).

Le moyen de chauffage primaire (26) fonctionne à puissance constante. Un capteur de température (28), monté entre les moyens de chauffage primaire (26) et régulé (27), fournit un signal indicatif de la température du profilé (1) à la sortie du moyen de chauffage primaire (26). Comme le moyen de chauffage primaire (26) fonctionne à puissance constante, la température détectée par le capteur (28) indique quelle puissance va être nécessaire pour atteindre la température voulue, par exemple 1200°C, pour l'austénitisation, et le moyen de chauffage régulé (27) est régulé en puissance sur la base du signal fourni par le capteur (28) pour que la température de 1200°C dans l'exemple soit atteinte à la sortie du moyen de chauffage régulé (27).

En outre, le moyen de refroidissement (24) est d'une puissance de refroidissement suffisante pour ramener la température du profilé (1) de la température d'austénitisation telle que 1200°C à une température inférieure à celle correspondant au point dit "MS" correspondant à la formation de la martensite. En d'autres termes, le moyen de refroidissement (24) est un moyen de trempe au défilé.

Par l'expression "au défilé", on veut dire que la pièce est traitée non pas en un seul bloc mais par zones successives à mesure que le chariot (18) effectue son mouvement continu commandé par la vis-mère (19).

Un manchon d'homogénéisation de température (29) entoure le profilé (1) dans la zone Z entre le moyen de chauffage (23) et le moyen de refroidissement (24). Ce manchon (29), réalisé en matière isolante, permet à la température et ainsi au façonnage thermomécanique que constitue le torsadage, de se répartir régulièrement dans toute la section transversale du profilé (1).

Le chariot (18) porte encore, d'une part en avant des moyens de chauffage (23) et d'autre part en arrière du moyen de refroidissement (24), des lunettes support (31) qui soutiennent le profilé (1) de part et d'autre de la zone Z de moindre résistance mécanique.

Le mandrin non-rotatif (9) comporte un couple-mètre (9c) (non représenté en détail), qui détecte les variations de couple au cours du torsadage et réalise un enregistrement des valeurs relevées. Le couple-mètre (9c) commande une alarme en cas d'anomalie. Les variations et anomalies peuvent résulter d'une variation ou anomalie portant sur la matière des barres, le débit de la douche, la vitesse du mandrin moteur (8) ou celle du chariot (18) par exemple. L'enregistrement des valeurs de couple permet ensuite d'effectuer un diagnostic, en corrélation avec d'autres données du processus de torsadage. Le couple-mètre peut être à jauges de contraintes, ou comporter un disque présentant des fentes occultant de manière variable un capteur optique en fonction de la déformation élastique torsionnelle sous l'action du couple.

Un paramètre important pour l'opération de torsadage est le rapport entre la vitesse de rotation des extrémités du profilé (1) l'une par rapport à l'autre et la vitesse de translation du chariot (18). Si l'on néglige les problèmes de variation de longueur du profilé (1) sous l'effet de la température d'une part, et le vrillage initial que peut présenter le profilé (1) avant torsadage d'autre part, le pas de torsadage est égal à la distance parcourue par le chariot (18) pendant que les extrémités du profilé (1) font un tour l'une par rapport à l'autre . En d'autres termes, dans ce cas idéal, le rapport de vitesses, exprimé en distance parcourue par le chariot (18) pendant un tour de rotation des extrémités du profilé (1) l'une par rapport à l'autre, donnerait directement la mesure du pas de torsadage obtenu.

Mais il est prévu selon l'invention de réguler le rapport de vitesses précité de manière à compenser les variations de longueur du profilé dues aux phénomènes thermiques, ainsi que les erreurs de vrillage initial du profilé (1) avant torsadage.

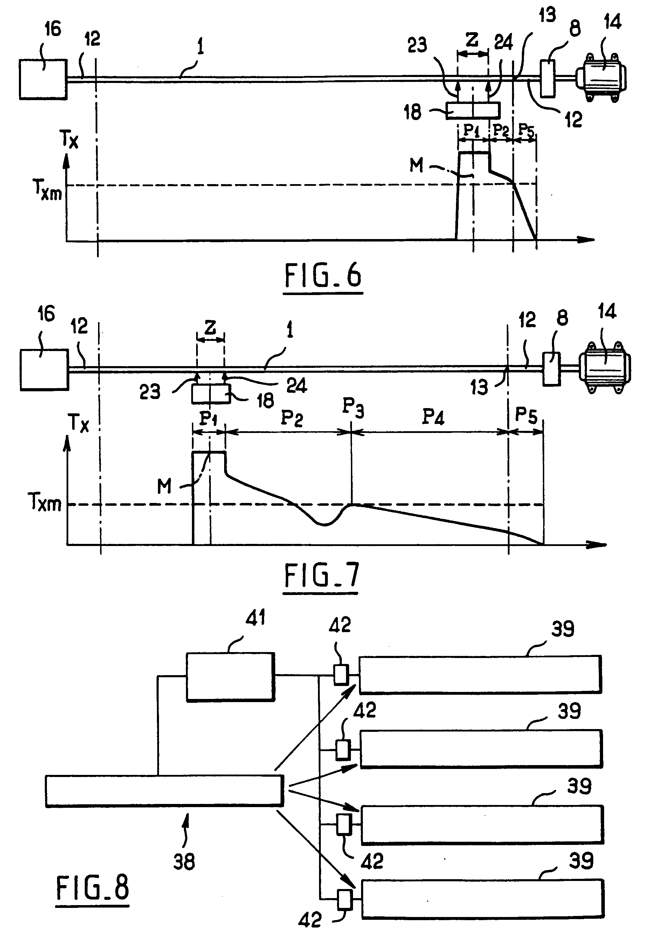

On a représenté schématiquement à la figure 5 le profilé (1) avec ses deux trous longitudinaux (2).

On a représenté en des points séparés par des intervalles de par exemple 100 mm le long du profilé (1) les sections transversales du profilé (1). On voit (de manière exagérée à la figure 5) que les trous (2) sont situés sur des diamètres espacés angulairement les uns par rapports aux autres de manière aléatoire, avec un sens de variation qui est également aléatoire et qui change plusieurs fois le long du profilé de l'exemple illustratif de la figure 5.

On comprend que si l'on torsadait un tel profilé (1) avec un rapport de vitesses constant entre la vis-mère (19) et le mandrin moteur (8), il en résulterait une barre torsadée (2) dont le pas de torsadage correspondrait à la superposition du vrillage initial et du torsadage non régulé effectué par la suite.

Il est prévu selon un mode de mise en oeuvre préféré du procédé selon l'invention de soustraire algébriquement le vrillage initial au torsadage qui serait nécessaire si les trous (2) étaient parfaitement rectilignes, de manière que le torsadage obtenu soit régulier.

Pour cela, en se référant à la position angulaire des trous (2) à l'extrémité du profilé (1) à partir de laquelle va commencer le torsadage (l'extrémité droite de la figure 4), on relève, par exemple tous les 100 mm de longueur du profilé, la position angulaire des trous (2), en la comptant positivement lorsque le décalage par rapport à la position précédente est dans le sens du torsadage qui sera effectué, et négativement dans le cas contraire.

Un tel relevé de vrillage peut être effectué par divers procédés. On pourrait par exemple rechercher par radioscopie les positions angulaires pour lesquelles les deux conduits sont vus superposés.

Un procédé préféré fait l'objet d'une demande de brevet parallèle par le même demandeur.

On va maintenant étudier l'incidence des phénomènes thermiques.

On a représenté à la figure 6 le profilé (1) en cours de torsadage peu après le début de cette opération, ainsi que la répartition spatiale des taux d'allongement Tx le long du profilé (1), sur un diagramme Espace - Taux situé juste en dessous.

La figure 7 représente la même chose, mais à un stade plus avancé du torsadage.

Comme le montre la figure 7, il correspond à la zone Z une plage P1 à fort taux d'allongement, due à la très forte température du profilé (1), puis un creux P2 correspondant au refroidissement par le moyen de refroidissement (24), suivi d'un sommet P3 dû au gonflement martensitique. Le sommet P3 est suivi d'une zone P4 de refroidissement lent jusqu'à la soudure (13) avec la rallonge (12) du côté du début du torsadage puis une zone P5 de transition avec la température ambiante le long de la rallonge (12).

Au contraire, dans la situation de début de torsadage (figure 6), seuls subsistent la zone P1 d'allongement fort, le début de la zone P2, et une zone P5 correspondant à une valeur moyenne de taux d'allongement plus grande qu'à la figure 7.

Le point théorique de torsadage est supposé situé au milieu M de la zone P1 dans les deux situations.

La comparaison des deux situations montre que, d'une manière générale, le taux d'allongement moyen Txm entre le point fixe que constitue le mandrin (8) et le point théorique de torsadage M diminue à mesure que le torsadage progresse. Cette règle peut cependant subir une exception lorsque le sommet P3 est au voisinage de la soudure (13), à un stade qui est donc intermédiaire entre ceux des figures 6 et 7.

Etant donné que l'on connaît les valeurs de vrillage initial tous les 100 mm du profilé refroidi, il faut déterminer la position de ces points de relevé de vrillage lorsque le profilé (1) est en train d'être torsadé.

Supposons que le point M soit situé en $M_P$ correspondant à un point de relevé de vrillage, on va selon l'invention réguler le torsadage jusqu'à ce que le point M soit situé en $M_{P+1}$ à une distance réelle (barre refroidie) de 100 mm du point $M_P$ de façon que le point $M_{P+1}$ corresponde lui aussi à un point de relevé de vrillage.

Il faut d'une part déterminer la distance apparente entre les points $M_P$ et $M_{P+1}$, et ce sera la distance que doit parcourir le chariot 18.

On peut exprimer la longueur réelle $L_P$ (profilé refroidi) entre un point théorique de torsadage $M_P$ en cours de torsadage et le mandrin 8 de la façon suivante:

$$L_P = La_P/(1 + Tx_P),$$

expression dans laquelle $La_P$ est la longueur apparente entre le point $M_P$ et le mandrin 8 compte-tenu des effets thermiques, et $Tx_P$ est la valeur du taux moyen Txm lorsque le point M est situé en $M_P$

On peut de même exprimer la longueur réelle $L_{P+1}$ entre un autre point théorique de torsadage $M_{P+1}$ et le mandrin 8 :

$$L_{P+1} = La_{P+1} / (1 + Tx_{P+1})$$

expression dans laquelle $La_{P+1}$ est la longueur apparente entre le point $M_{P+1}$ et le mandrin 8, et $Tx_{P+1}$ est la valeur du taux moyen Txm lorsque le point M est situé en $M_{P+1}$.

On veut donc que :

$$L_{P+1} - L_P = 100 \text{ mm}$$

par conséquent

$$La_{P+1} / (1 + Tx_{P+1}) - La_P / (1 + Tx_P) = 100 \text{ mm}$$

Si on appelle $DLa_P$ la distance apparente entre les points $M_P$ et $M_{P+1}$, c'est à dire la course à effectuer par le chariot 18 :

$$(La_P + DLa_P) / (1 + Tx_{P+1}) - La_P / (1 + Tx_P) = 100 \text{ mm}$$

$$La_P [1 / (1 + Tx_{P+1}) - 1 / (1 + Tx_P)] + DLa_P / (1 + Tx_{P+1}) = 100 \text{ mm}$$

sachant que $1 / (1 + Tx_{P+1}) \cong 1 - Tx_{P+1}$ et $1 / (1 + Tx_P) \cong 1 - Tx_P$
alors :

$$DLa_P / (1 + Tx_{P+1}) = 100 \text{ mm} - La_P [(1 - Tx_{P+1}) - (1 - Tx_P)] => DLa_P = (1 + Tx_{P+1}) [100 \text{ mm} - La_P (Tx_P - Tx_{P+1})] \tag{1}$$

$DLa_p$ est la course que doit effectuer le chariot 18 pour que le point théorique de torsadage passe du point $M_P$ au point $M_{P+1}$.

L'expression (1) donne bien la valeur de $DLa_p$, car les valeurs de $Tx_1$, ...$Tx_p$, $Tx_{p+1}$, ... peuvent être déterminées expérimentalement avant de lancer une fabrication portant sur un profilé de longueur, diamètre et matière déterminées. Par ailleurs la valeur de $La_p$ est égale à zéro pour le calcul de $DLa_1$ et à la distance parcourue par le chariot (18) jusqu'au point $M_p$ pour le calcul de $DL_{ap}$ .

Il faut maintenant savoir quelle est la rotation que doivent effectuer les deux extrémités du profilé l'une par rapport à l'autre pendant cette course.

Si les relevés de vrillage sont identiques pour les points $M_P$ et $M_{P+1}$, alors la rotation à effectuer est de 360° si le pas d'hélice voulu est de 100 mm dans l'exemple. Si les relevés de vrillage sont différents, on retranche à ces 360° la différence algébrique entre le relevé de vrillage au point $M_{P+1}$ et le relevé de vrillage au point $M_P$

Par exemple, si le relevé de vrillage au point $M_p$ est de + 5°et le relevé de vrillage au point $M_{P+1}$ est de - 5°, leur différence algébrique est égale à - 5 - (+5) = - 10°, et l'angle de torsadage pendant la course $Dla_p$ du chariot 18 doit être 360 - (-10) = 370°.

Entre deux points de relevé successifs tels que $M_P$ et $M_{P+1}$, la course $Dla_P$ correspondante et la course angulaire correspondante telle que 370° sont effectuées à vitesse constante, ce qui revient à supposer que la variation de vrillage initial et la variation du taux d'allongement moyen $Tx_m$ sont régulièrement reparties entre ces deux points.

Dans l'exemple représenté à la figure 4, le moteur (21) entraîne le chariot (18) à vitesse invariable. Pour réguler le rapport de vitesse entre la vitesse de déplacement longitudinal du chariot (18) et la vitesse de rotation du mandrin moteur (8), on a intercalé entre le moteur de puissance (14) et le mandrin moteur (8) un différentiel (32) dont les deux planétaires (33) sont reliés l'un au moteur (14) et l'autre au mandrin (8) tandis que sa cage porte-satellites (34) est liée en rotation à la sortie d'un réducteur (36) dont l'entrée est commandée par un servo-moteur (37).

Lorsque la cage (34) est maintenue immobile par le servo-moteur (37), le moteur (14), tournant à vitesse constante en sens inverse de celui voulu pour le torsadage, entraîne le mandrin (8) dans le sens du torsadage car le différentiel (32) se comporte en inverseur du sens de mouvement. Pour moduler la vitesse de rotation du mandrin moteur (8), on fait tourner le servo-moteur (37) dans un sens ou dans l'autre de manière à provoquer la rotation de la cage (34) dans le sens du moteur (14) si l'on souhaite ralentir la rotation du profilé (1) et dans le sens du mandrin (8) si l'on souhaite l'accélérer.

De préférence, on fait tourner le moteur (14) à une vitesse qui correspond non pas à la vitesse qui devrait être choisie si il n'y avait ni variation de longueur thermique ni vrillage initial, mais à la vitesse qui correspond sensiblement à la moyenne des vitesses de rotation qui serait choisie dans le cas où il suffirait de compenser les variations de longueur d'origine thermique, c'est à dire dans le cas où il n'y aurait aucun vrillage initial.

Autrement dit, on choisit comme vitesse constante pour le moteur (14) la vitesse constante que l'on utilisait pour entraîner le mandrin moteur selon l'état de la technique de manière à compenser en moyenne les erreurs dues aux dilatations.

Comme le montre la figure 8, on peut utiliser un banc de relevé de vrillage (38) pour alimenter plusieurs machines à torsader (39), car il faut beaucoup moins de temps pour effectuer le relevé de vrillage que pour effectuer le torsadage. Une unité centrale (41) est reliée d'une part au banc de relevé de vrillage (38) et d'autre part à des micro-ordinateurs (42) affectés chacun à l'une des machines à torsader. L'unité centrale (41) gère la production. Plus particulièrement, entre autres opérations qui sont en dehors de l'invention, elle collecte la "carte" de vrillage de chaque profilé (1), c'est à dire la liste des valeurs angulaires de vrillage pour les différents points $M_P$ du profilé, elle commande le transfert du profilé à une machine à torsader (39) disponible, et elle transfère au micro-ordinateur (42) correspondant la carte de vrillage de ce profilé.

Un capteur de position (non représenté) détectant la position angulaire de la vis-mère (19) informe le micro-ordinateur (42) de la position du chariot (18) le long du profilé 1. Par ailleurs, le micro-ordinateur (42) connaît, pour la nuance d'acier et le diamètre du profilé (1) reçu par la machine à torsader,les positions angulaires de la vis-mère (19) qui correspondent à des points $M_1$ ... $M_p$, $M_{p+1}$ etc, et, pour chaque couple de points $M_P$ et $M_{P+1}$ la course $Dla_P$ correspondante. Il connaît donc la vitesse théorique du moteur (37) entre chaque couple de points $M_P$, $M_{P+1}$ successifs dans le cas ou les relevés de vrillage de ces deux points seraient identiques. Le micro-ordinateur n'a donc, pour chaque profilé qu'à corriger cette vitesse en fonction de la différence des angles de vrillage entre ces deux points et commander le moteur (37), en lui appliquant une consigne de vitesse correspondante chaque fois qu'un point tel que $M_p$ est franchi. La consigne de vitesse est équivalente à une consigne de position à chaque instant et la régulation effectuée peut en pratique s'approcher davantage de l'une ou l'autre de ces deux formes équivalentes.

Dans l'exemple de la figure 9, on a modifié l'exemple de la figure 4 en raccordant directement le moteur (14) au mandrin moteur (8) (il faut alors que le moteur (14) tourne dans le sens voulu pour le mandrin (8)). En outre, on a raccordé l'autre mandrin (49) à un servo-moteur (37) par l'intermédiaire d'un réducteur (36). En effet, c'est la vitesse relative entre les deux extrémités du profilé (1) qui importe pour le torsadage et on peut ainsi se dispenser de l'emploi du différentiel (32).

Comme le montre la figure 10 une autre solution, par comparaison avec l'exemple de la figure 4, consiste à relier directement le moteur (14) au mandrin moteur (8), et à placer un différentiel (52) entre le moteur (21) et la vis-mère (19), de la même manière que le différentiel (32) de la figure 4 était monté entre le moteur (14) et le mandrin (8). La cage (53) du différentiel (52) est reliée au servo-moteur (37) par l'intermédiaire d'un réducteur (36).

Dans ce cas la vitesse de rotation des deux extrémités du profilé (1) l'une par rapport à l'autre est constante, et c'est la vis-mère (19) dont la vitesse varie pour que, à partir d'un point $M_P$ le chariot (18) atteigne la position correspondant au point théorique de torsadage $M_{P+1}$ lorsque le moteur (14) a effectué une rotation de l'angle voulu, 370° dans l'exemple calculé plus haut.

Bien entendu, l'invention n'est pas limitée aux exemples décrits et représentés, mais elle couvre tous les modes de réalisation qui ne sortent pas du cadre de l'invention telle que revendiquée. On pourrait aussi moduler la vitesse de l'un ou l'autre des moteurs (14) et (21).

## Revendications

1. Procédé pour fabriquer une barre à trous torsadée trempée (2), en particulier une barre en acier rapide pour forets à trous, à partir d'un profilé creux (1), dans lequel on torsade le profilé creux en faisant tourner l'une des extrémités du profilé (1) par rapport à l'autre tout en produisant un déplacement relatif longitudinal (22) entre le profilé (1) et un moyen de chauffage (23) suivi d'un moyen de refroidissement (24), caractérisé en ce qu'à l'aide du moyen de chauffage (23) on porte le profilé (1) à une température d'austénitisation d'environ 1200°C, en ce qu'on régule le rapport de vitesses entre la vitesse du déplacement relatif longitudinal (22) et la vitesse de rotation des extrémités du profilé (1) l'une par rapport à l'autre de manière à compenser les variations de longueur du profilé (1) dues aux phénomènes thermiques, et en ce qu'on effectue la trempe lors du refroidissement qui suit le chauffage à la température d'austénitisation.

2. Procédé selon la revendication 1, caractérisé en ce qu'on effectue la trempe à l'aide du moyen de refroidissement (24) que l'on déplace le long du profilé (1) à la suite du moyen de chauffage (23).

3. Procédé selon la revendication 1 ou 2, caractérisé en ce qu'on utilise le moyen de refroidissement (24) pour refroidir le profilé (1) à une température inférieure à la température du point MS, sensiblement égale à 300°C.

4. Procédé selon l'une des revendications 1 à 3, caractérisé en ce qu'on applique au profilé (1) une force de traction longitudinale pendant le torsadage.

5. Procédé selon l'une des revendications 1 à 4, caractérisé en ce qu'on détecte un vrillage initial du profilé (1) et lors de la régulation du rapport de vitesses, on ajoute algébriquement une correction compensant le vrillage initial à la correction compensant les phénomènes thermiques.

6. Procédé selon la revendication 5, caractérisé en ce qu'on détecte le vrillage initial sur toute la longueur du profilé (1) avant de commencer le torsadage.

7. Procédé selon la revendication 5 ou 6, caractérisé en ce qu'on obtient par la détection du vrillage initial une liste de valeurs de vrillage correspondant à des points régulièrement espacés de la longueur du profilé (1), et pendant le torsadage on compense le vrillage initial comme s'il était régulièrement réparti entre les paires de points successifs.

8. Procédé selon l'une des revendications 1 à 7, caractérisé en ce qu'à l'aide du moyen de chauffage (23) on effectue un chauffage initial avec des paramètres de chauffe invariables, on détecte la température à l'issue du chauffage initial, et on effectue un chauffage complémentaire dont on règle la puissance d'après la température mesurée, en vue de donner au profilé (1) une température désirée à l'issue du chauffage.

**9.** Procédé selon l'une des revendications 1 à 8, caractérisé en ce que pour réguler le rapport de vitesses, on fait tourner l'une des extrémités du profilé (1) à vitesse absolue constante et l'autre extrémité du profilé (1) à une vitesse de rotation que l'on règle.

**10.** Procédé selon l'une des revendications 1 à 8, caractérisé en ce que pour réguler le rapport de vitesses, on règle la vitesse d'un organe d'entraînement (8, 19) contribuant au déplacement relatif longitudinal entre le profilé (1) et le moyen de chauffage (23) suivi du moyen de refroidissement (24).

**11.** Procédé selon l'une des revendications 1 à 8, caractérisé en ce que pour réguler le rapport de vitesses, on immobilise en rotation une des extrémités du profilé, et on règle la vitesse d'un organe d'entraînement en rotation (8) de l'autre extrémité du profilé.

**12.** Procédé selon l'une des revendications 10 ou 11, caractérisé en ce que pour régler la vitesse de l'organe d'entraînement, on règle la vitesse d'un moteur auxiliaire (37) entraînant une entrée de commande (34) d'un différentiel (32) intercalé entre un moteur de puissance (14, 21) et l'organe d'entraînement (8, 19) tandis qu'on fait tourner le moteur de puissance (14, 21) à vitesse absolue constante.

**13.** Procédé selon l'une des revendications 9 ou 12, caractérisé en ce qu'on choisit comme vitesse absolue constante une vitesse correspondant à une compensation répartie.

**14.** Procédé selon l'une des revendications 9 à 13, caractérisé en ce qu'on règle ladite vitesse de rotation dans une plage s'étendant de part et d'autre de la valeur nulle.

**15.** Procédé selon l'une des revendications 1 à 14, caractérisé en ce que l'on détecte au moins à intervalles de temps successifs une position relative choisie parmi la position relative du profilé et du moyen de chauffage (23) et la position angulaire relative des extrémités du profilé (1), et en ce qu'on régule le rapport de vitesses en appliquant une correction à la vitesse de modification de l'autre de ces positions relatives.

**16.** Procédé selon l'une des revendications 1 à 15, caractérisé en ce qu'avant de torsader le profilé (1), on fixe une rallonge (12) à l'une au moins de ses extrémités, et on applique le couple de torsadage par l'intermédiaire de cette rallonge (12).

**17.** Machine pour fabriquer une barre à trous torsadée trempée (2) comprenant des moyens (8, 9, 49) pour soutenir et faire tourner l'une par rapport à l'autre les extrémités opposées d'un profilé creux (1) et des moyens (18, 19, 21) pour établir un déplacement relatif longitudinal entre le profilé et un ensemble de traitement thermomécanique (23, 24, 29) comprenant un moyen (23) de chauffage du profilé (1) suivi, relativement au sens (22) du mouvement relatif, par un moyen (24) de refroidissement du profilé (1), caractérisé en ce que le moyen de chauffage (23) est adapté à produire dans le profilé (1) une température au moins égale à la température d'austénitisation environ égale à 1200°C, et en ce qu'il est prévu des moyens (32, 34, 36, 37, 42, 52) de régulation du rapport de vitesses entre la vitesse de rotation des extrémités du profilé (1) l'une par rapport à l'autre et la vitesse du déplacement relatif longitudinal pour compenser l'effet des phénomènes thermiques sur le pas de torsadage obtenu après refroidissement de la barre torsadée (2).

**18.** Machine selon la revendication 17, caractérisée en ce que le moyen de chauffage (23) comprend un moyen de chauffage primaire (26) suivi, relativement au sens (22) du mouvement longitudinal, par un moyen de chauffage régulé (27).

**19.** Machine selon la revendication 18, caractérisée en ce qu'elle comporte un capteur de température (28) entre le moyen de chauffage primaire (26) et le moyen de chauffage régulé (27), ce dernier étant régulé en puissance d'après le signal du capteur de température (28).

**20.** Machine selon l'une des revendications 17 à 19, caractérisée en ce que l'ensemble de traitement thermomécanique (23, 24, 29) comprend un manchon d'homogénéisation de température (29) monté pour entourer le profilé (1) entre le moyen de chauffage (23) et le moyen de refroidissement (24).

**21.** Machine selon l'une des revendications 17 à 20, caractérisée en ce que le moyen de refroidissement (24) est adapté à ramener la température du profilé (1) en-dessous du point MS, environ égal à 300°C.

**22.** Machine selon l'une des revendications 17 à 21, caractérisée en ce qu'elle comprend un premier moyen d'entraînement de base (21) pour le déplacement longitudinal relatif, un deuxième moyen d'entraînement de base (14) pour la rotation des extrémités du profilé (1) l'une par rapport à l'autre, et un moyen d'entraînement correcteur (32, 34, 36, 37, 52) qui superpose un mouvement correcteur au mouvement créé par l'un des deux moyens d'entraînement de base (14, 21).

23. Machine selon la revendication 22, caractérisée en ce que le moyen d'entraînement correcteur comprend un ensemble moto-réducteur (36, 37) entraînant un organe de commande (34) d'un différentiel (32, 52) monté pour sélectivement moduler le mouvement à vitesse constante produit par l'un des deux moyens d'entraînement de base (14, 21).

24. Machine selon la revendication 22, caractérisé en ce que l'un des deux moyens d'entraînement de base (14) est relié à l'une des deux extrémités du profilé (1) et en ce que le moyen d'entraînement correcteur (36, 37) est relié à l'autre extrémité de profilé (1).

25. Machine selon l'une des revendications 22 à 24, caractérisée en ce qu'elle comprend un capteur de position d'un moyen d'entraînement de la machine, et des moyens pour associer à chaque position détectée du moyen d'entraînement une consigne de déplacement du moyen correcteur (32, 34, 36, 37, 52) et pour asservir le mouvement du moyen correcteur (32, 34, 36, 37, 52) à cette consigne de déplacement.

26. Machine selon l'une des revendications 17 à 25, caractérisée en ce que les moyens de régulation comprennent des moyens (42) pour prendre en compte des données sur le vrillage initial du profilé (1) pour compenser conjointement les effets de ce vrillage initial et des phénomènes thermiques sur le pas de la barre torsadée refroidie (2).

27. Machine selon la revendication 26, caractérisée en ce que les moyens de régulation prennent en compte des données sur la valeur du vrillage initial en des points répartis le long du profilé (1), et effectuant la régulation sur la base d'une interpolation des valeurs de vrillage entre les dits points répartis.

28. Machine selon l'une des revendications 17 à 27, caractérisée par des moyens (8) pour maintenir une des extrémités du profilé (1) en position axiale fixe et des moyens (9, 17, 49) pour solliciter le profilé (1) en traction à partir de l'autre extrémité du profilé (1), autorisée à se déplacer axialement.

29. Machine selon l'une des revendications 17 à 28, caractérisée en ce qu'elle comporte un moyen (9c) de mesure du couple de torsadage.

30. Machine selon l'une des revendications 17 à 29, caractérisée par des lunettes (31) supportant le profilé au voisinage des moyens de chauffage (23).

**Claims**

1. Method for manufacturing an oil hole twisted bar, heat treated (2) mainly an high speed steel rod for oil hole drills, starting from an hollow section which is twisted with the combination of rotation of one end (1) around its axis while sliding along the length (22) the rod (1) a heating source (23) followed by a cooling source characterized by the adjunction of the heating source (23) the section reaches an austenitising of 1200 °C, by the means of a speed adjustment between the sliding longitudinal movment (22) and the rotating speed of the hollow section (1) in comparison with the other end for compensating the rod lengths variations (1) issued from thermal laws, doing the heat treatment hardening during the cooling phase next sequently to the heating at austenitisation temperature.

2. Method according to claim (1) with the characteristic that hardening is made in accordance with the cooling source (24) which slides along with the section (1) after the heating system (23).

3. Method according to claim 1 or 2 characterized by using the cooling source (24) to cool the section (1) to a lower temperature than MS Point which equals to about 300°C.

4. Method according to claims 1 to 3 characterized by applying to the section (1) a longitudinal pulling force in the course of twisting.

5. Method according to claim 1 to 4 characterized by detection of an initial kink spiral of the section (1) and during speed gear regulation in adding by algebra a corrective figure compensating this initial kink spiral to the correction factor compensating thermic phenomenas.

**6.** Method according to claim 5 characterized by detecting the initial kink spiral all over the length of section (1) before starting hot twisting.

**7.** Method according to claim 5 or 6, characterized by obtention of detection of initial kink spiral a listing of kink spiral figures corresponding to regular spaced sections along the length of the rod (1) and simultaneously to the hot twisting, initial kink spiral is compensated as if it was regularly shared or distributed between spaces of successive points.

**8.** Method according to claims 1 to 7 characterized by using the means for heating it begins with initial heating with invariable heat parameters, then check the temperature after initial heating and then add eventually complementary heating with the heat power regulations in view of giving the profile (1) the desired temperature alter it has been heated.

**9.** Method according to claims 1 to 8 characterized in regulating the speed gear regulations, one end of the profile rotates at an absolute constant speed and the other extremity of the rod at a speed that is to be installed in function of the first.

**10.** Method according to claims 1 to 8 characterized that for regulating the speed gear ratio, one must first regulate a transmission gear (8 - 19) as a contribution to the relative longitudinal sliding between rod (1) and heating source (23) followed by the cooling system.

**11.** Method according to claims 1 to 8, characterized that for regulating the speed gear ratios one must fix in position of non rotating the chuck at one end of the profile and then regulate the rotating speed of the motorized chuck.

**12.** Method according to one of the 10 or 8 claims, characterized as if regulating the speed of the main motorized rotation one must regulate the speed of a secondary motor (37) monitoring an entry order (34) of gear box differential (32) in between the main motor and the chuck ; the main power motor rotating to an absolute constant speed.

**13.** Method according to one of the claims 9 or 12 characterized as choosing an absolute constant speed must correspond another speed perfectly shared in compensation.

**14.** Method according to one among claims 9 to 13 characterized as, when regulating the said rotating speed it is foreseen on a band extended plus and minus zero value.

**15.** Method according to one among claims 1 to 14 characterized by the detection at successive time gaps of a relative chosen location among the relative profile location together with the location of the heating source as well as the relative angle location of both ends of the profile ; adding the regulation of the speed gear ratio with a correction of the modified speed of the other of these relative locations.

**16.** Method according to one of the claims 1 to 15, characterized as before twisting the profile, a lengthening piece of rod is fixed to at least one of the profile's end before applying the twisting torque through this lengthened piece.

**17.** Machine for manufacturing twisted, hardened oil hole twisted bars (2) supposing fixtures (8, 9, 49) to hold and help rotation of one end opposite to the other of the hollow profile(1) and power to install a longitudinal relative transfer of the profile and a unity of thermo-mechanical heat treatment (23, 24, 29) that includes a heat treating source to heat the profile followed relatively to the direction (22) of the relative action by cooling shower on the profile (1) with a characteristic that the heating system is adapted to produce on the profile a temperature at least equal to 1200°C, and that are foreseen (32, 34, 36, 37,42, 52) ways regulating gear ratio speeds on rotation at the two ends of the profile (1) -one, compared with the other - and the relative longitudinal transfer speed compensating the thermical phenomenas effects on the twisted pitch, obtained, after cooling the twisted profile (2).

**18.** Machine according to claim 17 characterized where the heating system 23 includes a primary or preheating system (26) connected on the same transfer longitudinal line with another heating regulated system (27).

**19.** Machine according to claim 18 characterized as including a temperature recorder (28) set up between the primary heating system the regulated secondary heating system, this last one adjusting its power in junction with the primary temperature recorder (28).

**20.** Machine, according to claims 17 to 19 characterized where the entire thermomechanical heat treatment (23,24,29) includes a temperature homogeneization jacket for protecting the profile (1) from the heating system (23) and the cooling system (24).

21. Machine according to one of the claims 17 to 20 characterized where the cooling system is adapted to draw down the profile (1) temperature under MS ; temperature, about equal to 300°C.

22. Machine according to one of claims 17 to 21 characterized as describing a first driving basic motorization (21) for the relative longitudinal movement, a second basic driving force (14) for setting the two ends of the profile (1) the first compared to the second, and a correcting driving force (32, 34, 36, 37, 52) which superposes the correcting force to the force created by one of the two basic driving forces (14, 21).

23. Machine according to claim 22, characterized by the fact that the correcting drive force includes a reducing gear unit (36, 37) driving the operating lever (34) of a differential (32,52) set up for modulating by selection the constant speed rotation produced by one of the two basic driving gear motors (14, 21).

24. Machine according to claim 22, characterized by one among the two basic driving motors (14) is in connection with one of the two ends of the profile (1) and because the corrective driving motor (36, 37) is connected with the other end of the profile (1).

25. Machine according to one of the claims 22 to 24 characterized as including a location collector, a driving force of the machine and some systems for associating for each detector location of the driving force an instruction of correcting motion (32, 34, 36,37, 52) and submitting the correcting motion instruction.

26. Machine according to one of the claims 17 to 25, characterized if the regulation means include the means (42) to take in measurement, figures on the initial kink spiral of the profile (1) for compensating on the pitch of the cold twisted profiles and the values of this initial kink spiral as well as the thermical phenomenas.

27. Machine according to claim 26 characterized by regulation means taking in account definition on the initial kink spiral value in spots distributed along the profile (1) and acting the regulation on the basis of interpolate kink spiral values between these said distributed spots.

28. Machine, according to claims 17 to 27, characterized by fixtures for maintaining one of the end of the profile (1) in a gripped axial position and means (9, 17, 49) to sollicitate the profile (1) in traction from the other end of the profile (1) that can move axial exclusively.

29. Machine according to claims 17 to 28 characterized when a twisting torque measurement (9C) is included.

30. Machine according to one of the claims 17 to 28, characterized with guide support (31) holding the profile at the proximity of the heating means (23).

**Patentansprüche**

1. Herstellungsverfahren einer verdrallten gehärteten Lochstange (2) insbesondere einer Schnellstahlstange für Ölkanalbohrer, von einem Hohlprofil (1) ab, mittels Verdrallung des Hohlprofils durch Verdrehung eines Profilendes (1) gegenüber dem anderen, zusammen mit einem relativen Längsvorschub (22) einer Heizvorrichtung (23) und einer nachstehenden Abkühlvorrichtung (24) in Bezug auf das Profil (1), dadurch gekennzeichnet, dass durch die Heizvorrichtung (23) eine Austenitisationstemperatur von ca. 1200°C im Profil (1) erzeugt wird, dass durch Regelung des Verhältnisses zwischen der Längsvorschubgeschwindigkeit (22) und der Verdralldrehzahl die Längsausdehnung thermischer Natur des Profils (1) kompensiert wird, und dass das Härten durch Abkühlen unmittelbar nach Heizen auf Austenitisierungstemperatur erfolgt.

2. Verfahren nach Anspruch 1, dadurch gekennzeichnet, daß das Härten durch die Abkühlvorrichtung (24) erfolgt, die hinter der Heizvorrichtung (23) dem Hohlprofil (1) entlang geführt wird.

3. Verfahren nach Anspruch 1 oder 2, dadurch gekennzeichnet, daß die Abkühlvorrichtung (24) benutzt wird, um das Profil (1) unter die MS-Temperatur von ca. 300°C, abzukühlen.

4. Verfahren nach einem der Ansprüche 1 bis 3, dadurch gekennzeichnet, daß das Profil (1) einer Längsstreckung während des Verdrallens unterzogen ist.

5. Verfahren nach einem der Ansprüche, 1 bis 4, dadurch gekennzeichnet, daß eine Aufnahme der Verwindung des Hohlprofils (1) vorgenommen wird, und bei der Regelung des Geschwindigkeitsverhältnisses, algebraisch eine Korrektur zum Ausgleich der Verwindung zu der Korrektur zum Ausgleich der thermischen Phänomene hinzurgefügt wird.

6. Verfahren nach Anspruch 5, dadurch gekennzeichnet, daß eine Aufnahme der Bohrungsverwindung des Hohlprofils (1) auf seiner Gesamtlänge vor dessem Verdrallen durchgeführt wird.

7. Verfahren nach einem der Ansprüche 5 oder 6, dadurch gekennzeichnet, daß die Aufnahme des Vorverwindens eine Liste von Verwindungswerten für regelmäßig angeordnete Punkte des Hohlprofils (1) erbringt, und daß während des Verdrallens, die Verwindung kompensiert wird, als ob sie zwischen den aufeinanderfolgenden Punktpaaren gleichmässig verteilt wäre.

8. Verfahren nach einem der Ansprüche 1 bis 7, dadurch gekennzeichnet, daß mit Hilfe der Heizvorrichtung (23) eine Vorerwärmung unter beständigen Heizparametern durchgeführt wird, daß die Temperatur nach der Vorwärmung gemessen wird und dass zwecks Erreichung der gewünschten Endtemperatur des Profils (1) eine zusätzliche Erwärmung durchgeführt wird, deren Leistung ensprechend der gemessenen Temperatur gewählt wird.

9. Verfahren nach einem der Ansprüche 1 bis 8, dadurch gekennzeichnet, daß bei der Regelung des Geschwindigkeitsverhältnisses, ein Ende des Hohlprofils unter konstanter Drehzahl angetrieben wird, während das andere Ende unter gesteuerter Drehzahl angetrieben ist.

10. Verfahren nach einem der Ansprüche 1 bis 8, dadurch gekennzeichnet, daß zwecks Regelung der Geschwindigkeitsverhältnisses, die Geschwindigkeit eines Antriebssystems (8, 19) derart eingestellt ist, daß eine relative Längsbewegung zwischen Profil (1) und Heizsystem (23) sowie anschliessendem Kühlsystem (23) erfolgt.

11. Verfahren nach einem der Ansprüche 1 bis 8, dadurch gekennzeichnet, daß zwecks Regelung des Geschwindigkeitsverhältnisses, ein Ende des Hohlprofils (1) fixiert wird, während das andere Ende mittels eines regelbaren Antriebssystems (8) gedreht wird.

12. Verfahren nach einem der Ansprüche 10 oder 11, dadurch gekennzeichnet, daß zwecks Regelung der Geschwindigkeit des Antriebssystems, die Drehzahl eines Hilfsmotors (37) geregelt wird, wobei die Steuerung (34) eines Differentials (32) aktiviert wird welches zwischen dem Leistungsmotoren (14, 21) und dem Antriebselement (8,19) eingebaut ist, während der Antriebsmotor (14, 21) mit absoluter Drehzahl fährt.

13. Verfahren nach einem der Ansprüche 9 oder 12, dadurch gekennzeichnet, daß als absolute Geschwindigkeit eine Drehzahl gewählt wird, die einer verteilten Kompensation entspricht.

14. Verfahren nach einem der Ansprüche 9 bis 13, dadurch gekennzeichnet, daß die obengenannte Drehzahl in einem Regelbereich beiderseitig des Nullwerts gehalten wird.

15. Verfahren nach einem der Ansprüche 1 bis 4, dadurch gekennzeichnet, daß zwischen relativer Längsstellung des Profils und der Heizvorrichtung einerseits, und relativer Winkelposition beider Hohlprofilenden andererseits eine ausgewählte relative Position mindestens periodisch aufgenommen wird, und daß die Regelung des Geschwindigkeitsverhältnisses durch Korrigierung der Regelabweichung der anderen relativen Positionen erfolgt.

16. Verfahren nach einem der Ansprüche 1 bis 15, dadurch gekennzeichnet, daß vor dem Verdrallen des Profils eine Verlängerung (12) mindestens an einem Ende des Profils angebracht wird, und daß das Verdralldrehmoment auf dieser Verlängerung erzeugt wird.

17. Maschine zur Herstellung einer verdrallten und gehärteten Lochstange (2), unter Anwendung von Mitteln (8, 9, 49), um ein Hohlprofil (1) zu halten und seine Enden entgegendrehen zu lassen, und Mitteln (18, 19, 21) für eine relative Längsbewegung zwischen dem Profil und einer thermomechanischen Behandlungsvorrichtung (23, 24, 29) mit einer Heizvorrichtung (23) des Profils (1), und einer relativ zur Bewegungsrichtung (22) montierten Kühlvorrichtung (24), dadurch gekennzeichnet, daß die Heizvorrichtung (23) im Profil (1) eine Austenitisierungtemperatur von mindestens 1200°C erzeugt, und daß Organe (32, 34, 36, 37, 42, 52) zur Regelung des Geschwindigkeitsverhältnisses zwischen jeweiliger Profilendendrehzahl (1) und relativer Längsvorschubgeschwindigkeit vorgesehen wird, um die Wirkung der thermischen Phänomene auf dem nach Abkühlung der verdrallten Stange (2) erreichten Schritt zu kompensieren.

**18.** Maschine nach Anspruch 17, dadurch gekennzeichnet, daß die Heizvorrichtung (23) eine Primärheizung (26) beinhaltet, hinter welcher relativ zur Richtung (22) der Längsbewegung eine geregelte Heizspule zum Einsatz kommt.

**19.** Maschine nach Anspruch 18, dadurch gekennzeichnet, daß sie einen Temperaturfühler (28) zwischen Primär-(26) und Regulierheizungsspule (27) enthält, wobei letztere entsprechend dem Signal des Temperaturfühlers (28) geregelt ist.

**20.** Maschine nach einem der Ansprüche 17 bis 19 dadurch gekennzeichnet, daß die thermomechanische Behandlungsanlage einen Muffel, zur Temperaturausgleichung (29) aufweist, welcher das Profil (1) zwischen Heiz- (23) Abkühlvorrichtung (24) umgibt.

**21.** Maschine nach einem der Ansprüche 17 bis 20, dadurch gekennzeichnet, daß die Abkühlvorrichtung (24) geeignet ist, die Profiltemperatur (1) unter die MS- Temperatur von ca. 300°C abzusenken.

**22.** Maschine nach einem der Ansprüche 17 bis 21, dadurch gekennzeichnet, daß sie aus einem ersten Grundantrieb (21) zum relativen Längsvorschub besteht, aus einem zweiten Grundantrieb (14) zum Gegendrehen der beiden Profilenden (1), und aus einem Korrekturantriebsorgan (32, 34, 36, 37, 52) zwecks Überlagerung einer Korrekturbewegung auf die von einem der beiden Grundantriebe (14, 21) erzeugte Bewegung.

**23.** Maschine nach Anspruch 22, dadurch gekennzeichnet, daß das Korrekturantriebsorgan aus einem Motor mit regelbaren Drehzahlen (36, 37) besteht, der das Steuerorgan (34) eines Differentials (32, 52), zur ausgewählten Abwandlung des Laufes mit Konstantgeschwindigkeit durch einen der beiden Grundantriebe (14, 21) betätigt.

**24.** Maschine nach Anspruch 22 dadurch gekennzeichnet, daß einer der zwei Grundantriebe (14) mit einem der Profilenden (1) verbunden ist, und daß der Korrektur - antriebsorgan (36, 37, 49) mit dem anderen Profilende (1) verbunden ist.

**25.** Maschine nach einem der Ansprüche 17 bis 20, dadurch gekennzeichnet, daß sie einen Stellungsmessfühler an einem Antriebselement der Maschine enthält, und auch Mittel zur Assoziierung zu jeder erfassten Stellung des Antriebsmittels mit einem Versetzungssollwert des Korrekturorgans und zur Nachfolgesteuerung zwischen der Bewegung des Korrekturorgans und diesem Positionssollwert.

**26.** Maschine nach einem der Ansprüche 17 bis 25, dadurch gekennzeichnet, daß die Regelungsmittel aus Organen (42) bestehen, um Daten bezüglich des Vorverwindens des Profils (1) miteinzurechnen, zur gleichzeitigen Kompensation von Verwindungen und der thermischen Phänomene auf dem Schritt abgekühlten verdrallten Stange (2).

**27.** Maschine nach Anspruch 26, dadurch gekennzeichnet, daß die Regelungsmitteln verfügbare Verwindungsdaten an verschiedenen Punkten über die Länge des Profils (1) hin miteinrechnen, wobei die Regulierung aufgrund einer Interpolierung der Verwindungswerte wischen den genannten Punkten erfolgt.

**28.** Maschine nach einem der Ansprüche 17 bis 27, gekennzeichnet durch Mittel (8) um ein Ende des Profils (1) axial festeinzuhalten, und durch Mittel (9, 17), um das Profil (1) von anderen Profilende (1) her unter Zugkraft zu setzen wobei letzteres sich axial bewegt.

**29.** Maschine nach einem der Ansprüche 17 bis 28, dadurch gekennzeichnet, daß sie mit einem Messgerät für den Verdrallungsmoment (9C) ausgestattet ist.

**30.** Maschine nach einem der Ansprüche 17 bis 29, dadurch gekennzeichnet, daß durch Verwendung von Leisten (31) das Profil in der Nähe des Heizvorrichtungen unterstützt wird.

FIG.1

FIG.2

FIG.3

FIG.5

FIG_4

FIG_9

FIG_10

FIG.6

FIG.7

FIG.8

17